# EUROPEAN PATENT SPECIFICATION

(11) **EP 3 808 534 B1**
(45) Date of publication and mention of the grant of the patent: **07.09.2022**
(21) Application number: 20200705.0
(22) Date of filing: 08.10.2020
(51) Int. Cl.: B29C 49/26, B29C 51/10, B29C 51/08

(54) **THERMOFORMING APPARATUS**
THERMOFORMVORRICHTUNG
DISPOSITIF DE THERMOFORMAGE

(30) Priority: 16.10.2019 IT 201900019085
(43) Date of publication of application: 21.04.2021
(73) Proprietor: C.M.S. S.p.A., 24019 Zogno (BG) (IT)
(72) Inventor: VILLA, Giuseppe, 21100 Varese (IT)
(74) Representative: Villanova, Massimo

(56) References cited:
- EP-A2- 0 767 047
- EP-B1- 1 763 430
- EP-B1- 2 233 274
- US-A- 5 562 933

## Description

### Background of the invention

The invention relates to an apparatus for thermoforming plastics, in particular for thermoforming plate or sheet material, where plate or sheet means a body that has two dimensions that prevail over the third (thickness).

Specifically but not exclusively, the invention in question can be usefully used for thermoforming products that are usable in numerous sectors such as, for example, the automotive industry, aerospace, production of agricultural machinery, earth-moving machines, caravans, buses, prefabricated garages for cars, railway industry, refrigeration, beauty care, electromedical sector, production of bath tubs, shower trays, spa equipment, suitcases, placards, advertising billboards, trays, etc.

The thermoforming apparatus in question may be configured, in particular, for vacuum thermoforming, in which a preheated plate rests on a die by suction by copying the conformation of the die, or by thermoforming under pressure, in which the plate is pushed on the die by pressure exerted by a fluid or by a punch or counter-mould, or by other types of thermoforming.

The prior art comprises a thermoforming apparatus with a horizontal support plane for supporting a heated plate, a die arranged below the support plane to define a thermoforming cavity, and an operating unit (counter-mould or plate-pressing frame) arranged above the support plane and movable in a vertical direction so as to take on a lower position in which it interacts with the plate, for example to push the plate downwards to promote thermoforming on the die or to push and fix the edge of the plate. Apparatuses are in particular known in which the units are moved by vertical rods with a rack that are movable with the units themselves and coupled with motorized gears.

EP2233274B1 **discloses a thermoforming machine comprising a clamping frame with a support structure connected to a vertical moving system.**

EP1763430B1 **discloses a thermoforming apparatus with a drawing press comprising an upper table and a lower table movable relative to each other.**

US5562933A **discloses a thermoforming apparatus as in the preamble of claim 1.**

Various aspects of prior art apparatuses are improvable.

In the first place, it is advisable to reduce the overall vertical dimensions thereof. It is further desirable to reduce stress to the unit during movement thereof, and to reduce the constructional complexity of the movable unit.

### Summary of the invention

One object of the present invention is to overcome one or more of the aforesaid limits and drawbacks of the prior art.

One object of the invention is to provide an alternative solution to the problem of moving vertically an operating unit, for example a counter-mould or a plate-pressing frame, in a thermoforming apparatus.

One advantage is to make a thermoforming apparatus with relatively reduced overall dimensions in a vertical direction.

One advantage is to provide a thermoforming apparatus with an operating unit (for example a counter-mould or a plate-pressing frame) that is movable in a vertical direction and includes a movement system for moving the unit in which the mechanical stress during movement is mainly discharged onto support elements that are fixed and outside the movable operating unit.

One advantage is to give rise to a thermoforming apparatus comprising a frame (that is usable for example as a plate-pressing frame or for supporting tooling means) that is movable vertically by a drive system and is provided with a relatively reduced number of components.

One advantage is to reduce the mechanical stress and the consequent flexure deformation of the frame.

One advantage is to enable a frame, comprising in particular a centrally open perimeter structure, to be movable vertically with a vertical axial stroke of relatively great amount.

One advantage is to make available a constructionally simple and cheap apparatus for thermoforming plate or sheet plastics.

Such objects and advantages, and still others, are achieved by an apparatus and/or a method according to one or more of the claims set out below.

In one embodiment, a thermoforming apparatus comprises: a thermoforming die configured for performing thermoforming of plate or sheet material; at least one frame (for example a frame configured for use as a plate-pressing frame and/or for supporting tooling means) movable vertically above the die; two or more uprights to support the frame and two or more drive units, one for each upright, arranged on the frame, in which each upright comprises a vertical linear counteracting element (for example a linear gear) and each drive unit comprises at least one motor and at least one wheel (for example a gear wheel) rotated by the motor and coupled with a respective linear counteracting element and in which the drive units are coordinated by electronic control means programmed for driving simultaneously the motors in such a manner that the drive units cooperate together to move the frame through the effect of the coupling between the various wheels arranged on the frame and the respective fixed vertical counteracting elements.

### Brief description of the drawings

The invention can be better understood and implemented with reference to the attached drawings that illustrate some embodiments thereof by way of non-limiting example, wherein:
Figure 1 is a perspective view of a first embodiment of a thermoforming apparatus according to the invention;
Figure 2 is a side view, in a raised elevation, of the thermoforming apparatus of Figure 1;
Figure 3 shows an enlarged detail of Figure 1;
Figure 4 is a perspective view of a second embodiment of a thermoforming apparatus according to the invention;
Figure 5 is a side view, in a raised elevation, of the thermoforming apparatus of Figure 3;
Figure 6 is a perspective view of a third embodiment of a thermoforming apparatus according to the invention;
Figure 7 is a side view, in a raised elevation, of the thermoforming apparatus of Figure 1.

### Detailed description

For the sake of simplicity and clarity of expression, identical elements of different embodiments have been indicated by the same numbering.

With reference to the aforesaid figures, overall with 1 a thermoforming apparatus has been indicated that is suitable for thermoforming plastics, in particular for thermoforming plate or sheet material, where plate or sheet means a body that has two dimensions that prevail over the third and is bounded by two opposite surfaces situated at a reciprocal distance (i.e. the thickness of the plate or sheet) that is relatively small.

The thermoforming material may be provided in discrete plates or sheets, for example stiff, or may be supplied in a continuous form from a reel. The thermoforming material may be loaded onto the thermoforming apparatus 1 and/or unloaded from the apparatus manually, automatically or semiautomatically.

The thermoforming apparatus 1 may comprise, in particular, a support plane 2 to support plate or sheet material, for example to support the material in a horizontal position. The thermoformable material may be preheated (by heating means, for example heating means of known type) to a temperature suitable for thermoforming.

The thermoforming apparatus 1 may comprise, in particular, at least one forming die 3, for example arranged below the support plane 2, configured for defining a thermoforming cavity of the plate or sheet material. The forming cavity of the die 3 may have, in particular, at least one opening facing upwards to receive from above the thermoformable material.

The thermoforming apparatus 1 may be configured, in particular, for vacuum thermoforming, in which the preheated plate or sheet material rests on the die 3 by suction, copying the conformation of the die.

The thermoforming apparatus 1 may comprise, in particular, at least one frame 4 (for example arranged above the support plane 2 and/or arranged above the forming cavity) that is movable at least in a vertical direction in both directions.

The frame 4 may comprise, in particular, a perimeter structure that defines a central opening with a free space located vertically above the forming cavity of the die 3 and/or above the plate or sheet material located on the support plane 2 to be thermoformed.

In particular, the frame 4 may comprise, as in the illustrated embodiments, at least two first crosspieces that are opposite and spaced apart from one another and joined together by two second crosspieces that are opposite and spaced apart from one another. The frame 4 may comprise, in particular, a perimeter closed-loop structure, for example of rectangular shape.

The frame 4 may comprise, in particular, at least one pressing plate edge and may be movable with the possibility of assuming at least one upper position, in which the plate or sheet material to be thermoformed is positionable on the support plane 2, and at least one lower position, in which an edge of the material is engaged between the pressing plate edge and the support plane 2, in particular by interposing a seal that enables the forming cavity of the die 3 to be sealed hermetically below the material, for example to perform suction thermoforming in a vacuum.

The thermoforming apparatus 1 may comprise, in particular, two or more support elements (columns) extending vertically, or uprights 5, which are arranged to support the frame 4 and are fixed to a base. Each upright 5 may comprise, in particular, a linear counteracting element extending in length in a vertical direction. Each, or at least one, counteracting element may comprise, in particular, a vertical linear gear 6 (or rack, or vertical rack).

In the specific embodiments disclosed here, the group of uprights 5 that supports the frame 4 comprises four uprights 5 arranged at the four vertices of the perimeter structure of rectangular shape of the frame 4.

The thermoforming apparatus 1 may comprise, in particular, two or more drive units 7, one for each upright 5, arranged or the frame 4. The drive units 7 are carried by the frame 4 and are movable together with the frame 4.

Each drive unit 7 may comprise, as in the embodiments disclosed here, at least one motor (for example an electric motor) and at least one wheel coupled with a respective counteracting element and rotatable by the respective motor. The motorized wheel may comprise, in particular, a gear wheel, or pinion, or reel. The motor may be, in particular, a motor of reversing type, to enable the frame 4 to be moved both upwards and downwards.

Each gear wheel of a drive unit 7 may engage, in particular, with the linear gear 6 of the respective upright 5 with which the respective drive unit 7 is operationally associated.

In the specific embodiments, the frame 4 supports four drive units 7 arranged near the four vertices of the perimeter structure of rectangular shape that is part of the frame 4.

The various drive units 7 are coordinated by programmable electronic control means (for example an electronic processor) so as to cooperate with one another to move vertically the frame 4 by operating simultaneously.

The movement occurs by the effect of driving the motors of the drive units 7 and by the rack and pinion couplings formed by the gear wheels of the drive units 7 and by the linear gears 6.

The thermoforming apparatus 1 may comprise, in particular, a further frame 8 and two or more further drive units 9 arranged on the further frame 8. The further frame 8 may be arranged, in particular, at a greater height than the support plane 2 and/or the forming cavity of the die 3. The further frame 8 may be movable at least in one direction (in particular vertical) in both directions. In particular, the further frame 8 may be movable independently of the frame 4. The further drive units 9 may be fitted to the further frame 8 and may cooperate together to move the further frame 8, similarly to how the drive units 7 may cooperate together to move the frame 4.

Each further drive unit 9 may comprise, in particular, at least one further motor and at least one further gear wheel that is rotatable by the respective further motor. Each further gear wheel may engage with a further linear gear 11 arranged vertically on a respective further upright 5 (or, in other embodiments, on the same upright 5 that has a linear gear 6).

In these specific embodiments, the uprights 5 and the further uprights 5 are distinct from one another and are fixed to the same base. It is however possible to provide other embodiments in which a linear gear 6 and a further linear gear 11 are arranged on the same upright 5.

The further frame 8 may comprise, in particular, a (closed) loop perimeter structure that defines a central opening with a free space arranged vertically above the plate or sheet material on the support plane 2 or on the die 3. In particular, the further frame 8 may comprise at least two first crosspieces that are opposite and spaced apart from one another and joined together by two second crosspieces that are opposite and spaced apart from one another. The further frame 8 may comprise, in particular, a (closed) loop perimeter structure, for example of rectangular shape.

The further frame 8 may be configured, in particular, for supporting tooling means that is usable in the thermoforming process. The tooling means carried by the further frame 8 may comprise, in particular, a counter-mould configured for interacting with the thermoplastic material to be thermoformed, for example to touch the material during thermoforming so as to avoid the formation of undesired folds or other imperfections. The tooling means carried by the further frame 8 may comprise, in particular, means for cooling the thermoformed material, which may in turn comprise, as in the specific case, a plurality of outlet ports 10 of a cooling fluid (for example air).

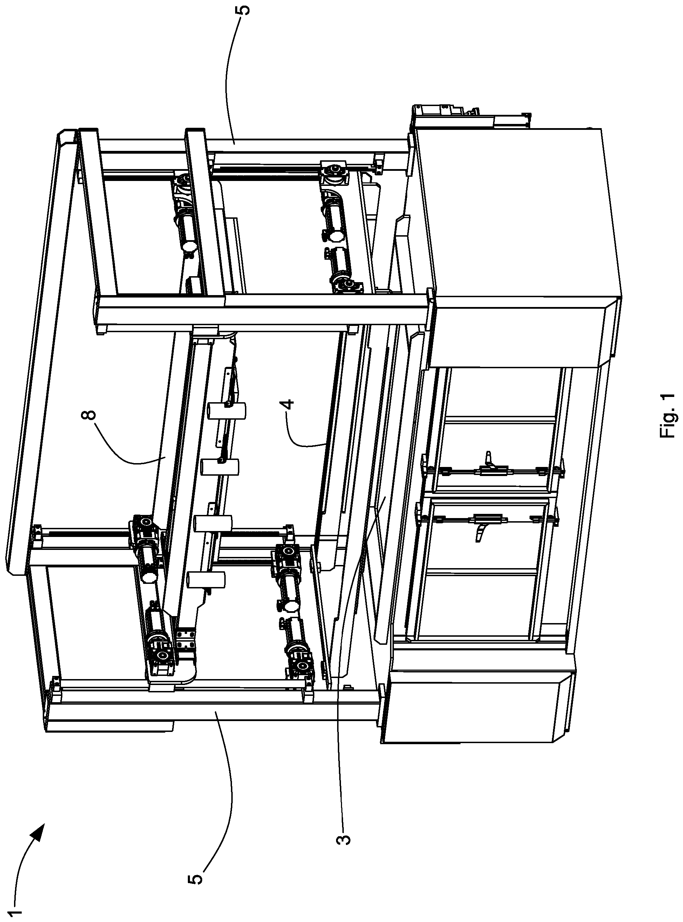

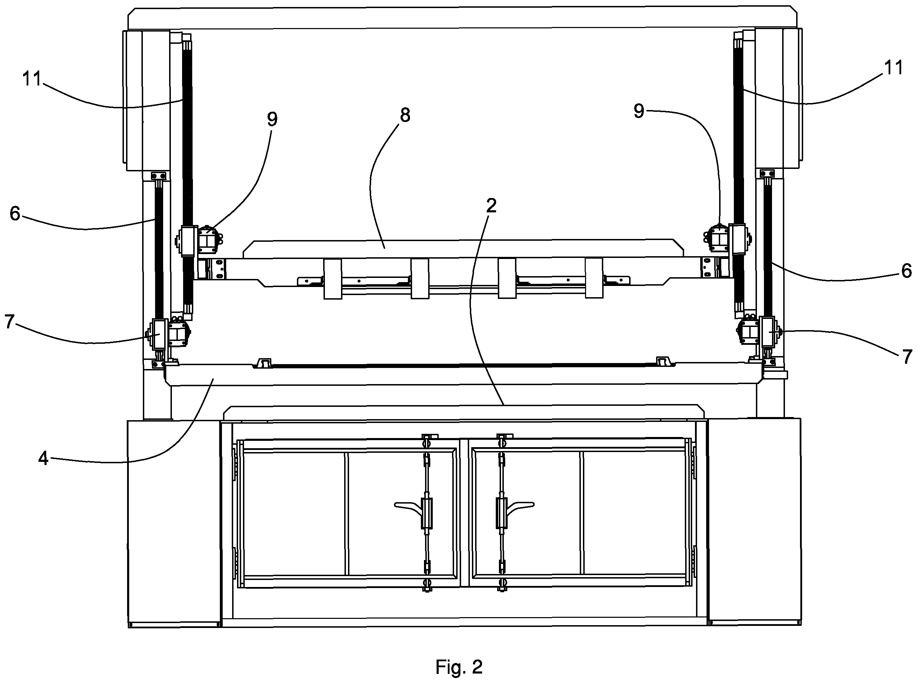

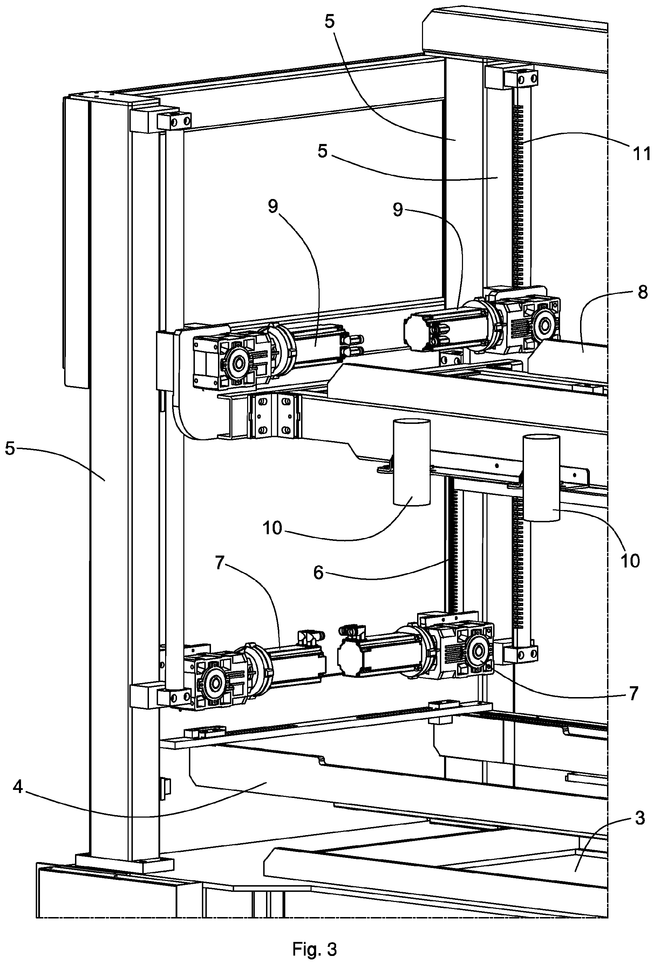

In the embodiment of Figures 1, 2 and 3, the thermoforming apparatus 1 comprises both one frame 4 (in particular with a plate-pressing function), and a further frame 8 (in particular with a support function for tooling means, like for example tooling means comprising a counter-mould and/or cooling means). In particular, the thermoforming apparatus 1 may comprise two frames (for example the frame 4 and the further frame 8) each of which comprises a perimeter structure (for example rectangular), in which the perimeter structure of one frame (for example the further frame 8 or the frame 4) may have greater dimensions than the dimensions of the perimeter structure of the other frame (for example the frame 4 or the further frame 8) in such a manner that the smaller frame is at least partially or completely, insertable into the central opening defined by the perimeter structure of the larger frame.

The thermoforming apparatus 1 may comprise, as in this embodiment, a vertical weight-bearing structure comprising a plurality of uprights 5 and/or further uprights 5 that support the frame 4 and the further frame 8.

In particular, each upright 5 may carry a vertical linear gear 6 (or rack, or vertical rack) coupled with a gear wheel (or pinion, or reel) of a drive unit 7 of the frame 4, and each further upright 5 may carry a further vertical further linear gear 11 coupled with a gear wheel of a further drive unit 9 of the further frame 8.

It is possible to provide, in other embodiments that are not illustrated, for each upright 5 supporting only one vertical linear gear that is coupled both with a gear wheel of a drive unit 7 of the frame 4, and with a gear wheel of a further drive unit 9 of the further frame 8. It is possible to provide, in other embodiments that are not illustrated, for each upright 5 to support both a linear gear 6 coupled with a drive unit 7 of the frame 4, and a further linear gear 11 coupled with a further drive unit 9 of the further frame 8.

It is possible to provide, in other embodiments that are not illustrated, for the thermoforming apparatus 1 to comprise a vertical weight-bearing structure with uprights (for example four uprights) that support both the frame 4, and the further frame 8.

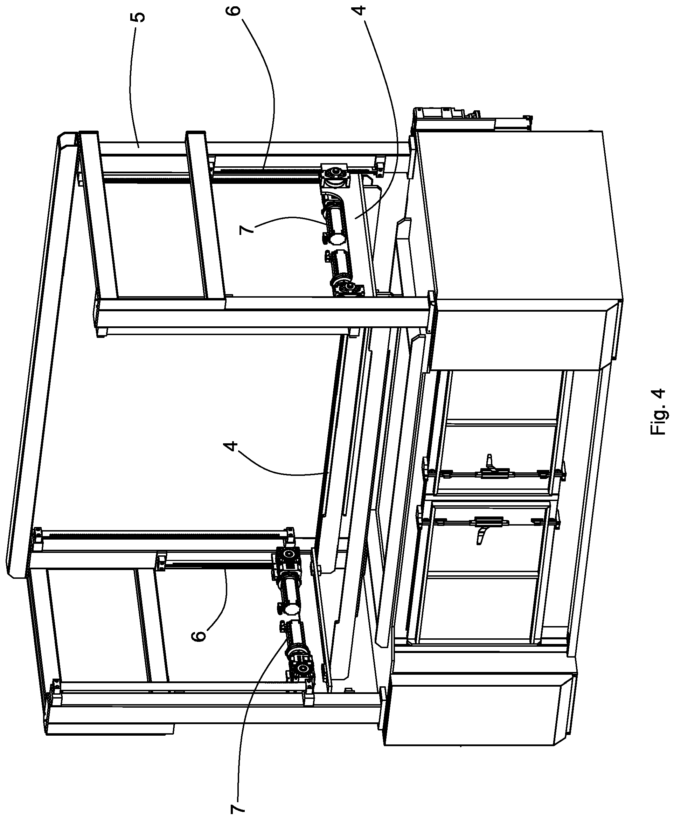

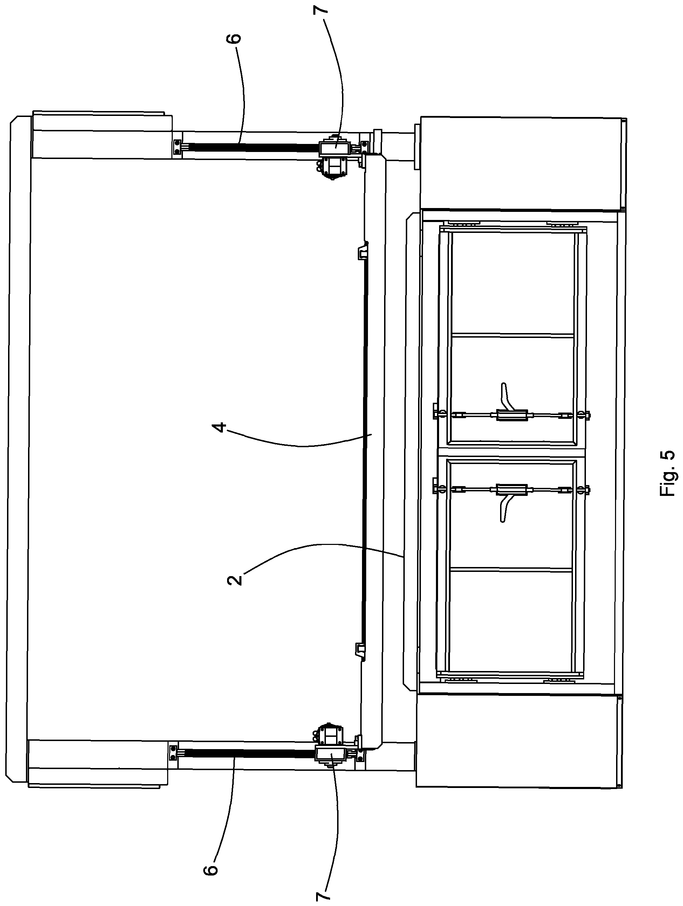

In the embodiment of Figures 4 and 5, the thermoforming apparatus 1 comprises a frame 4 (in particular with a plate-pressing function), without a further frame 8 acting as a counter-mould and/or support for other tools.

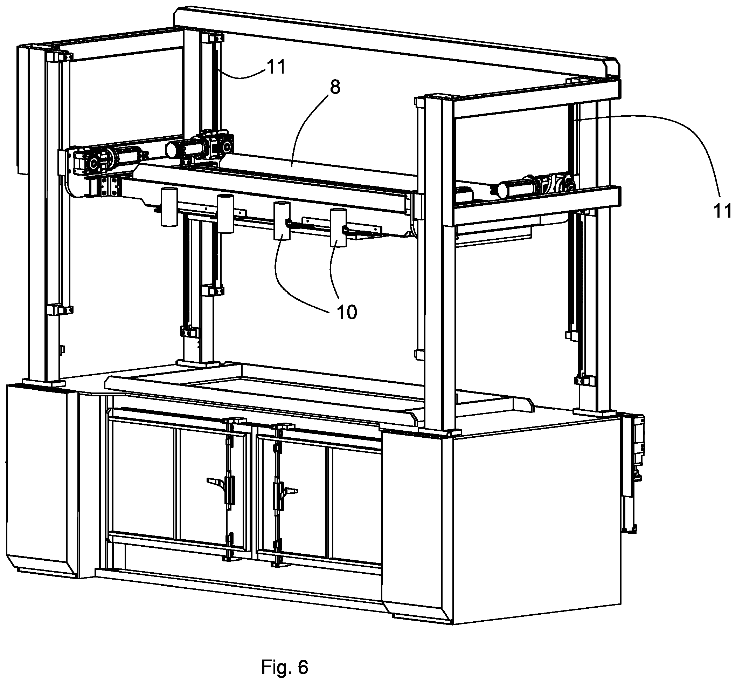

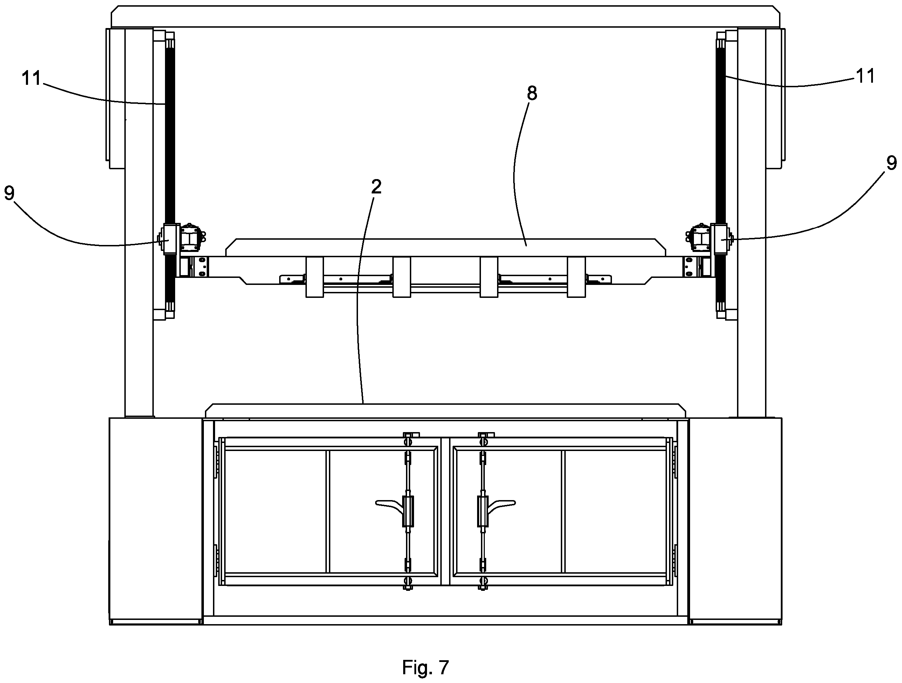

In the embodiment of Figures 6 and 7, the thermoforming apparatus 1 comprises a further frame 8 (in particular acting as a counter-mould and/or support for other tools), without a frame 4 with a plate-pressing function.

The thermoforming apparatus 1 may comprise, in particular, suction means (for example operating below the die 3) to generate a vacuum in the thermoforming cavity to perform vacuum thermoforming.

The suction means may comprise, in particular, suction means of known type that is not disclosed in greater detail here. In the specific embodiments illustrated here, all the thermoforming apparatuses 1 are provided with suction means for thermoforming in a vacuum.

The thermoforming apparatus 1 may be configured, as in these embodiments, in such a manner that at least one drive unit 7 and/or at least one further drive unit 9 and/or each drive unit 7 and/or each further drive unit 9 comprises at least one wheel coupled with the respective linear counteracting element (gear 6 or further gear 11) and can be connected (for example directly) with a rotor of the respective drive motor (for example without interposing a gear transmission).

In these specific embodiments, the counteracting element and the wheel comprise, respectively, at least one linear gear and at least one gear wheel, even if it is possible to provide other embodiments in which the counteracting element comprises a friction surface and the wheel comprises a friction wheel configured for rolling with friction on the counteracting element.

The thermoforming apparatus 1 may comprise linear guiding means that may comprise, in particular, for each upright, at least one fixed vertical linear sliding guide (for example a prismatic guide), which is associated with the upright 5 and at least one slide sliding on the fixed vertical linear guide and fitted to the frame 4.

Vertical movement of the frame 4 is achieved by driving simultaneously the various (four) drive units 7, in a manner coordinated by the electronic control means so that the movement occurs regularly, maintaining the frame 4 in a substantially horizontal position, with the four vertices of the rectangular perimeter structure that are moved at substantially the same speed and remaining at substantially the same height instant by instant, with the possibility of correcting a possible misalignment of one of the vertices of the rectangular perimeter structure by acceleration or deceleration of the respective drive motor.

Similarly, vertical movement of the further frame 8 is achieved by driving simultaneously the various (four) further drive units 9, in a coordinated manner by the electronic control means so that the movement occurs regularly, maintaining the further frame 8 in a substantially horizontal position, as disclosed above for the frame 4, also including the possibility of correcting a possible misalignment.

The thermoforming apparatus 1 comprises a plurality of columns or uprights, each of which is provided with at least one linear gear that acts as a counteracting member for counteracting the transmission of motion (coupled with a motorized pinion) and also acts as a vertical movement guide of the movable unit (frame 4 and/or further frame 8), in particular of a movable unit with a perimeter structure that is centrally free, which can provide at least one operating task in the thermoforming process, for example a plate-pressing or support function for a counter-mould and/or for other equipment.

The thermoforming apparatus 1 comprises a plurality of motorized units (drive units 7 and/or further drive units 9) that are carried by the vertically movable unit (frame 4 and/or further frame 8) and drive movement thereof.

The various motors of the drive units 7 and/or of the further drive units 9 are coordinated together by control software that maintains the alignment and the horizontality of the respective perimeter structure.

It is possible to provide, as in these embodiments (see Figures 1, 2, 3, 4 and 5), for the frame 4 to comprise a perimeter structure (for example with a plate-pressing function) that is arranged (in particular considering a vertical projection) at the edge of the moulding zone, i.e. at the seal zone (with seal) that enables the forming cavity of the die 3 to be sealed hermetically where the thermoformable material is moulded.

It is possible to provide, as in these embodiments (see Figures 1, 2, 3, 6 and 7), for the further frame 8 to comprise a perimeter structure (for example with a counter-mould and/or port 10 support function) that is arranged outside (considering a vertical projection) of the moulding zone, i.e. outside the vertical space above the forming cavity of the die 3 where the material is moulded.

It is possible to provide, as in the embodiment of Figures 1, 2 and 3, for the further frame 8 to comprise a perimeter structure with cross sections that are different (in this embodiment greater) than a perimeter structure of the frame 4, for example in such a manner that the perimeter structure of the further frame 8 in the downward vertical movement thereof can exceed in a vertical direction, at least partially, the perimeter structure of the frame 4, for example passing at least partially outside the perimeter structure of the frame 4, in particular such as to surround the perimeter structure of the frame 4.

The thermoforming apparatus 1 enables a movement to be performed of each movable unit (frame 4 and/or further frame 8) by generating a stress that at least prevalently, is exerted (by tensile stress) on the uprights 5, that form support and guide columns. This stress may comprise, in particular, mechanical stress exerted mainly on the uprights 5 (in particular tensile stress), with the possibility of relatively reduced stress on the movable unit (frame 4 and/or further frame 8).

The thermoforming apparatus 1 enables a movement of each movable unit (frame 4 and/or further frame 8) to be performed by generating stress in which the action and reaction forces of the (vertical) motion are arranged substantially at the same height and/or at the zone where the action of lateral guiding and/or containment of the movable unit occurs (i.e. at the height of the gear wheels). It has in fact been seen that the vertical weight-bearing structure (which includes the uprights 5 and/or the further uprights 5) performs both the function of guiding the vertical motion of the movable unit and the function of a counteracting element to generate the tensile force that generates the movement.

The thermoforming apparatus 1 thus enables a relatively light structure to be made because the stress is discharged mainly on the vertical structure fixed to the base, so that particular robustness of the movable unit is not required. Further, the system for supporting and guiding the movement is particular stiff and precise.

Another advantage of the thermoforming apparatus 1 is that the perimeter structure of the frame 4 and/or the perimeter structure of the further frame 8 can surround the moulding zone, leaving the moulding zone substantially free and thus, for example, available and without constraints to be able to perform operations that are useful for the thermoforming process. Further, the perimeter structure of the further frame 8 can be outside the perimeter structure of the frame 4, so that the downward axial stroke of the further frame 8 can be relatively high.

The thermoforming apparatus 1 disclosed above is of the so-called "closed chamber" type, i.e. in which the forming cavity can be sealed by the frame 4 with pressing plate edge and with the help of a seal for creating a chamber with a hermetic seal, i.e. a volume below the thermoformable material at the die 3 where it is possible to generate a vacuum.

One advantageous aspect consists in that the thermoforming apparatus 1 may comprise, in particular, at least one frame with a perimeter structure open at the centre, which is particularly light and at the same time robust, which can support tooling means such as, for example, a counter-mould or a further mould, and which can be usable in combination with a further frame which may be also, in particular, provided with a perimeter structure open at the centre.

## Claims

1. Thermoforming apparatus (1) comprising:
- a die (3) for thermoforming plate or sheet material heated to a temperature suitable for thermoforming;
- at least one frame (4) arranged above said die (3) and movable in at least one vertical direction;
- two or more uprights (5) arranged for supporting said frame (4), each upright (5) comprising at least one vertical counteracting element (6);
- two or more drive units (7), at least one for each upright (5), arranged on said frame (4), each of said two or more drive units (7) comprising a motor and a wheel which can be rotated by the respective motor, each wheel being coupled with the counteracting element (6) of the respective upright (5), said two or more drive units (7) cooperating together to move said frame (4);
**characterized by comprising**
- **a further frame (8) and two or more further drive units (9), said further frame (8) being arranged above said die (3) and being movable at least in one vertical direction, said two or more further drive units (9) being arranged on said further frame (8) and collaborating together to move said further frame (8), each of said two or more further drive units (9) comprising a further motor and a further wheel which can be rotated by the respective further motor, each further wheel meshing with a vertical counteracting element (6) or with a further vertical counteracting element (11).**

2. Apparatus according to claim 1, wherein said counteracting element comprises a vertical linear gear (6) and said wheel comprises a gear wheel which meshes with said linear gear.

3. Apparatus according to claim 1 or 2, wherein said frame (4) comprises a perimeter structure that defines a central opening; said frame (4) comprising, in particular, a rectangular perimeter structure.

4. Apparatus according to any one of the preceding claims, wherein said two or more uprights (5) comprise at least four uprights (5) each of which is associated with a respective drive unit (7).

5. Apparatus according to any one of the preceding claims, wherein said frame (4) comprises at least one pressing plate edge and is movable with the possibility of assuming at least one upper position, in which the thermoformable material can be positioned above said die (3), and at least one lower position, in which an edge of the material is engaged by said pressing plate edge.

6. Apparatus according to any one of the preceding claims, wherein said further vertical counteracting element comprises a further vertical further linear gear (11) and said further wheel comprises a further gear wheel.

7. Apparatus according to **any one of the preceding claims,** wherein said further frame (8) comprises a perimeter structure that defines a central opening; said further frame (8) comprising, in particular, a rectangular perimeter structure.

8. Apparatus according to **any one of the preceding claims,** wherein said frame (4) comprises a perimeter structure that defines a central opening and wherein the perimeter structure of said further frame (8) has greater dimensions than the perimeter structure of said frame (4) in such a manner that said frame (4) is insertable at least partially into the central opening defined by the perimeter structure of said further frame (8).

9. Apparatus according to any one of **the preceding claims,** wherein said further frame (8) is provided with thermoforming tooling means.

10. Apparatus according to claim **9,** wherein said thermoforming tooling means comprises a counter-mould and/or means for cooling the thermoformed material.

11. Apparatus according to any one of **the preceding claims,** wherein said two or more uprights (5) comprise at least four uprights (5) each of which is associated with a respective further drive unit (9).

12. Apparatus according to any one of **the preceding claims,** wherein said two or more further uprights (5) comprise at least four further uprights (5) each of which is associated with a respective further drive unit (9).

13. Apparatus according to any one of the preceding claims, comprising suction means for generating a vacuum in said thermoforming die (3) to perform vacuum thermoforming.

14. Thermoforming method which makes use of a thermoforming apparatus (1) according to any one of the preceding claims, said method comprising the steps of arranging thermoformable material on a thermoforming die (3) and moving at least one frame (4) in a vertical direction above said die (3) along two or more uprights (5), wherein said moving step comprises simultaneously driving two or more motorized drive units (7) arranged on said frame (4) each of which is operationally associated with a respective upright (5).

## Patentansprüche

1. Vorrichtung (1) zum Thermoformen, aufweisend:
- eine Form (3) zum Thermoformen platten- oder bogenförmigen Materials, das auf eine Temperatur erwärmt wird, die zum Thermoformen geeignet ist;
- wenigstens einen Rahmen (4), der oberhalb der Form (3) angeordnet ist und in wenigstens eine vertikale Richtung bewegbar ist;
- zwei oder mehrere Vertikalen (5), die angeordnet sind, um den Rahmen (4) zu stützen, wobei jede Vertikale (5) wenigstens ein vertikales gegenwirkendes Element (6) umfasst;
- zwei oder mehrere Antriebseinheiten (7), und zwar wenigstens eine für jede Vertikale (5) und an dem Rahmen (4) angeordnet, wobei jede der zwei oder mehreren Antriebseinheiten (7) einen Motor und ein Rad umfasst, das durch den jeweiligen Motor gedreht werden kann, wobei jedes Rad mit dem gegenwirkenden Element (6) der jeweiligen Vertikalen (5) gekoppelt ist, und wobei die zwei oder mehreren Antriebseinheiten (7) zusammenarbeiten, um den Rahmen (4) zu bewegen;
**dadurch gekennzeichnet, dass** es umfasst:
- einen weiteren Rahmen (8) und zwei oder mehrere weitere Antriebseinheiten (9), wobei der weitere Rahmen (8) oberhalb der Form (3) angeordnet ist und in wenigstens eine vertikale Richtung bewegbar ist, wobei die zwei oder mehreren Antriebseinheiten (9) an dem weiteren Rahmen (8) abgeordnet sind und zusammenwirken, um den weiteren Rahmen (8) zu bewegen, wobei jede der zwei oder mehreren weiteren Antriebseinheiten (9) einen weiteren Motor umfassen, sowie ein weiteres Rad, das durch den jeweiligen weiteren Motor gedreht werden kann, wobei jedes weitere Rad in Eingriff steht mit einem vertikalen gegenwirkenden Element (6) oder mit einem weiteren vertikalen gegenwirkenden Element (11).

2. Vorrichtung nach Anspruch 1, wobei das gegenwirkende Element ein vertikales Lineargetriebe (6) umfasst und das Rad ein Zahnrad umfasst, das in Eingriff steht mit dem Lineargetriebe.

3. Vorrichtung nach Anspruch 1 oder 2, wobei der Rahmen (4) eine Umfangsstruktur aufweist, die eine zentrale Öffnung definiert; und wobei der Rahmen (4) insbesondere eine rechteckige Umfangsstruktur aufweist.

4. Vorrichtung nach einem der vorstehenden Ansprüche, wobei die zwei oder mehreren Vertikalen (5) wenigstens vier Vertikale (5) umfassen, von denen jede in Verbindung steht mit einer jeweiligen Antriebseinheit (7).

5. Vorrichtung nach einem der vorstehenden Ansprüche, wobei der Rahmen (4) wenigstens einen Pressplattenrand umfasst und bewegbar ist mit der Möglichkeit der Einnahme wenigstens einer oberen Position, in welcher das thermoformbare Material oberhalb der Form (3) positioniert werden kann und wenigstens einer unteren Position, in welcher ein Rand des Materials von dem Pressplattenrand angegriffen wird.

6. Vorrichtung nach einem der vorstehenden Ansprüche, wobei das weitere vertikale gegenwirkende Element ein weiteres vertikales Lineargetriebe (11) umfasst und das weitere Rad ein weiteres Zahnrad umfasst.

7. Vorrichtung nach einem der vorstehenden Ansprüche, wobei der weitere Rahmen (8) eine Umfangsstruktur aufweist, die eine zentrale Öffnung definiert; und wobei der weitere Rahmen (8) insbesondere eine rechteckige Umfangsstruktur aufweist.

8. Vorrichtung nach einem der vorstehenden Ansprüche, wobei der Rahmen (4) eine Umfangsstruktur aufweist, die eine zentrale Öffnung definiert und wobei die Umfangsstruktur des weiteren Rahmens (8) größere Abmessungen als die Umfangsstruktur des Rahmens (4) derart hat, dass der Rahmen (4) zumindest teilweise in die zentrale Öffnung einsetzbar ist, die durch die Umfangsstruktur des weiteren Rahmens (8) definiert ist.

9. Vorrichtung nach einem der vorstehenden Ansprüche, wobei der weitere Rahmen (8) mit thermoformenden Werkzeugen versehen ist.

10. Vorrichtung nach Anspruch 9, wobei die thermoformenden Werkzeuge eine Gegenform und/oder Mittel zum Kühlen des thermogeformten Materials umfassen.

11. Vorrichtung nach einem der vorstehenden Ansprüche, wobei die zwei oder mehreren Vertikalen (5) wenigstens vier Vertikale (5) umfassen, von denen jede mit einer jeweiligen weiteren Antriebseinheit (9) in Verbindung steht.

12. Vorrichtung nach einem der vorstehenden Ansprüche, wobei die zwei oder mehreren Vertikalen (5) wenigstens vier weitere Vertikale (5) umfassen, von denen jede mit einer jeweiligen weiteren Antriebseinheit (9) in Verbindung steht.

13. Vorrichtung nach einem der vorstehenden Ansprüche, umfassend eine Saugeinrichtung zur Erzeugung eines Vakuums in der thermoformenden Form (3) zur Durchführung eines Vakuum-thermoformens.

14. Thermoformverfahren unter Verwendung einer Vorrichtung (1) zum Thermoformen nach einem der vorstehenden Ansprüche, wobei das Verfahren die Schritte umfasst des Anordnens von thermoverformbarem Material auf einer thermoformenden Form (3) und Bewegens wenigstens eines Rahmens (4) in einer vertikalen Richtung oberhalb der Form (3) entlang zweier oder mehrerer Vertikalen (5), wobei der Schritt des Bewegens das gleichzeitige Antreiben zweier oder mehrerer motorisierter Antriebseinheiten (7) umfasst, die an dem Rahmen (4) angeordnet sind und von denen jede betriebsmäßig mit einer jeweiligen Vertikalen (5) in Verbindung steht.

## Revendications

1. Appareil de thermoformage (1) comprenant :
- un moule (3) pour thermoformer un matériau en plaque ou en feuille chauffé à une température appropriée pour le thermoformage ;
- au moins un cadre (4) agencé au-dessus dudit moule (3) et mobile dans au moins une direction verticale;
- deux ou plus montants (5) agencés pour supporter ledit cadre (4), chaque montant (5) comprenant au moins un élément antagoniste vertical (6);
- deux ou plus unités d'entraînement (7), au moins une pour chaque montant (5), agencées sur ledit cadre (4), chacune desdites deux ou plus unités d'entraînement (7) comprenant un moteur et une roue que le moteur respectif peut faire tourner, chaque roue étant couplée à l'élément antagoniste (6) du montant (5) respectif, lesdites deux ou plus unités d'entraînement (7) coopérant ensemble pour déplacer ledit cadre (4);
**caractérisé en ce qu'**il comprend
- un autre cadre (8) et deux ou plus autres unités d'entraînement (9), ledit autre cadre (8) étant agencé au-dessus dudit moule (3) et étant mobile au moins dans une direction verticale, lesdites deux ou plus autres unités d'entraînement (9) étant agencées sur ledit autre cadre (8) et collaborant ensemble pour déplacer ledit autre cadre (8), chacune desdites deux ou plus autres unités d'entraînement (9) comprenant un autre moteur et une autre roue que l'autre moteur respectif peut faire tourner, chaque autre roue s'engrenant avec un élément antagoniste vertical (6) ou avec un autre élément antagoniste vertical (11).

2. Appareil selon la revendication 1, dans lequel ledit élément antagoniste comprend un engrenage linéaire vertical (6) et ladite roue comprend une roue d'engrenage qui s'engrène avec ledit engrenage linéaire.

3. Appareil selon la revendication 1 ou 2, dans lequel ledit cadre (4) comprend une structure périmétrique qui définit une ouverture centrale ; ledit cadre (4) comprenant, en particulier, une structure périmétrique rectangulaire.

4. Appareil selon l'une quelconque des revendications précédentes, dans lequel lesdits deux ou plus montants (5) comprennent au moins quatre montants (5) associés chacun à une unité d'entraînement (7) respective.

5. Appareil selon l'une quelconque des revendications précédentes, dans lequel ledit cadre (4) comprend au moins un bord de plaque de pression et est mobile avec la possibilité d'adopter au moins une position supérieure, dans laquelle le matériau thermoformable peut être positionné au-dessus dudit moule (3), et au moins une position inférieure, dans laquelle un bord du matériau est engagé par ledit bord de plaque de pression.

6. Appareil selon l'une quelconque des revendications précédentes, dans lequel ledit autre élément antagoniste vertical comprend un autre engrenage linéaire vertical (11) et ladite autre roue comprend une autre roue d'engrenage.

7. Appareil selon l'une quelconque des revendications précédentes, dans lequel ledit autre cadre (8) comprend une structure périmétrique qui définit une ouverture centrale ; ledit autre cadre (8) comprenant, en particulier, une structure périmétrique rectangulaire.

8. Appareil selon l'une quelconque des revendications précédentes, dans lequel ledit cadre (4) comprend une structure périmétrique qui définit une ouverture centrale et dans lequel la structure périmétrique dudit autre cadre (8) a des dimensions plus grandes que la structure périmétrique dudit cadre (4) de telle sorte que ledit cadre (4) puisse être inséré au moins partiellement dans l'ouverture centrale définie par la structure périmétrique dudit autre cadre (8).

9. Appareil selon l'une quelconque des revendications précédentes, dans lequel ledit autre cadre (8) est pourvu de moyens d'outillage de thermoformage.

10. Appareil selon la revendication 9, dans lequel lesdits moyens d'outillage de thermoformage comprennent un contre-moule et/ou des moyens pour refroidir le matériau thermoformé.

11. Appareil selon l'une quelconque des revendications précédentes, dans lequel lesdits deux ou plus montants (5) comprennent au moins quatre montants (5) qui sont associés chacun à une autre unité d'entraînement (9) respective.

12. Appareil selon l'une quelconque des revendications précédentes, dans lequel lesdits deux ou plus autres montants (5) comprennent au moins quatre autres montants (5) qui sont associés chacun à une autre unité d'entraînement (9) respective.

13. Appareil selon l'une quelconque des revendications précédentes, comprenant des moyens d'aspiration pour générer un vide dans ledit moule de thermoformage (3) afin de réaliser un thermoformage sous vide.

14. Procédé de thermoformage qui se sert d'un appareil de thermoformage (1) selon l'une quelconque des revendications précédentes, ledit procédé comprenant les étapes d'agencer du matériau thermoformable sur un moule de thermoformage (3) et de déplacer au moins un cadre (4) dans une direction verticale au-dessus dudit moule (3) le long de deux ou plus montants (5), dans lequel ladite étape de déplacer comprend entraîner simultanément deux ou plus unités d'entraînement motorisées (7) agencées sur ledit cadre (4) et qui sont associées chacune de manière opérationnelle à un montant (5) respectif.
